# FASCICULE DE BREVET EUROPEEN

(11) **EP 1 301 333 B1**
(45) Date de publication et mention de la délivrance du brevet: **17.08.2005**
(21) Numéro de dépôt: 01940635.4
(22) Date de dépôt: 30.05.2001
(51) Int. Cl.: B29C 70/44, B29C 53/76

(54) **CORPS CREUX COMPOSITE ET SON PROCEDE DE FABRICATION**
HOHLER FORMKÖRPER AUS VERBUNDWERKSTOFF UND VERFAHREN ZU DESSEN HERSTELLUNG
COMPOSITE HOLLOW BODY AND METHOD FOR MAKING SAME

(30) Priorité: 20.07.2000 FR 0009640
(43) Date de publication de la demande: 16.04.2003
(73) Titulaire: Saint-Gobain Vetrotex France S.A., 73000 Chambéry (FR)
(72) Inventeur: DEBALME, Jean-Paul, F-73000 Chambéry (FR); ROCHER, Gilles, F-73000 Chambéry (FR)
(74) Mandataire: Muller, René
(86) Numéro de dépôt international: PCT/FR2001/001673
(87) Numéro de publication internationale: WO 2002/007954

(56) Documents cités:
- WO-A-00/15415
- WO-A-00/15418

## Description

L'invention concerne un corps creux composite et son procédé de fabrication, le corps creux étant constitué d'une couche interne en matière thermoplastique, d'une couche intermédiaire composite en matière thermoplastique dans laquelle sont noyées des fibres de renforcement, et d'une couche externe en matière thermoplastique.

On connaît d'après la demande de brevet WO 00/24566 des corps creux de ce type destinés à contenir par exemple des fluides sous pression. Ces corps creux sont de forme cylindrique. La fusion de la couche interne avec la couche intermédiaire est obtenue par le procédé de fabrication qui consiste, après enroulement autour d'une structure primaire, ou "liner" - terme qui sera employé dans la suite de la description - en matière thermoplastique, d'un ruban de matière thermoplastique dans laquelle sont noyés des fils de verre continus, à chauffer à une température supérieure à la température de fusion de la matière thermoplastique, la surface du liner recouverte du ruban dans une zone située immédiatement après la zone de contact entre le ruban et le liner, puis à appliquer une pression locale sur la surface du liner recouverte du ruban dans une zone située immédiatement après la zone de chauffe. Ce procédé permet de fusionner parfaitement la matière thermoplastique du liner et celle du ruban composite et d'évacuer l'air entre les couches du ruban recouvrant le liner. Enfin, pour revêtir le corps cylindrique ainsi obtenu d'une couche externe de finition et de protection en matière thermoplastique, on procède par co-extrusion.

Ce procédé s'avère particulièrement avantageux pour les corps creux allongés de forme cylindrique mais il est bien plus délicat, voire parfois impossible, à mettre en oeuvre pour des formes plus complexes notamment s'agissant de la co-extrusion de la couche externe en matière thermoplastique.

La demande de brevet WO 00/15415 propose pour la fabrication d'un réservoir sous pression composite de forme non cylindrique de recouvrir un liner en matière thermoplastique d'une couche de matière composite à base de fibres de verre par enroulement filamentaire, de placer dans un moule ce produit semi-fini ou préforme (terme qui sera employé par la suite) en y ayant introduit au préalable une poche gonflable, et de porter à température l'ensemble tout en appliquant une pression à l'intérieur du liner par le gonflage de la poche, ce qui permet de réaliser une consolidation de la couche composite avec le liner.

Pour un réservoir de ce type selon le preambule de la revendication 1 nécessitant en outre un revêtement fonctionnel externe autour de la couche composite, ce revêtement étant en matière thermoplastique, la préforme composée du liner et de la couche composite est entouré d'un film thermoplastique avant son installation dans le moule. La consolidation des trois constituants que sont le liner, la couche composite et le film se fait également par chauffage du moule et gonflage de la poche, selon le preambule de la revendication 7.

La solution retenue par ce document pour élaborer la couche externe d'une forme complexe nécessite donc un entourage par un film thermoplastique. Or cette opération peut s'avérer délicate et longue à mettre en oeuvre lorsque la structure complexe présente des contours aux formes variables, l'opérateur devant veiller à revêtir convenablement les détails de ces contours. Le coût d'une telle solution est également à considérer car l'utilisation d'un tel film thermoplastique et le temps passé à l'appliquer augmentent de manière conséquente le prix de revient du produit.

L'invention a donc pour but de fabriquer de manière plus simple et économique un corps creux composite comportant une couche externe de revêtement en matière thermoplastique.

Le corps creux selon l'invention est caractérisé en ce que la couche externe est formée par la matière thermoplastique de la couche intermédiaire et éventuellement de la couche interne, matière qui a migré au-delà de la couche intermédiaire lors de la fabrication du corps creux. Ce corps creux constitue ainsi un produit homogène car la continuité de la matière thermoplastique du liner jusqu'à la couche externe assure une consolidation parfaite des composants, ce qui n'est pas forcément garanti lorsque les couches constituantes sont, comme dans l'état de la technique, ajoutées de façon successive les unes aux autres puis consolidées.

En outre, cette solution s'avère plus rapide à mettre en oeuvre que celle de l'art antérieur par le gain d'une étape dans le procédé, puisqu'il ne nécessite pas l'application d'un film en matière thermoplastique.

Selon une caractéristique, le corps creux est constitué avant la migration, par le liner et la couche intermédiaire composite revêtant ledit liner, la migration de la matière thermoplastique ayant lieu après une mise sous pression de la paroi interne du liner et du chauffage du liner recouvert de la couche intermédiaire.

De manière surprenante, les inventeurs ont ainsi mis en évidence que la matière de la couche intermédiaire migrait au-delà de ladite couche intermédiaire lors de sa consolidation avec le liner, et que les moyens mis en oeuvre pour la consolidation pouvaient être adaptées pour faire migrer également la matière thermoplastique du liner de façon à augmenter l'épaisseur de la couche externe désirée.

Avantageusement, la matière thermoplastique de la couche intermédiaire composite est identique à celle de la couche interne. De préférence, la matière thermoplastique est une polyoléfine, par exemple du polypropylène ou du polyéthylène, ou bien un polyester thermoplastique comme du téréphtalate de polyéthylène (PET) ou du téréphtalate de polybutylène (PBT), et les fibres de renforcement sont du verre.

Le procédé de fabrication de ce corps creux composite comporte les étapes suivantes :
- parer d'une matière composite constituée de matière thermoplastique mélangée à des fibres de renforcement la surface externe du liner de manière à constituer une préforme;
- introduire dans un moule la préforme à l'intérieur de laquelle a été insérée une baudruche gonflable ;
- chauffer la préforme et gonfler l'intérieur de la baudruche pour appliquer une pression contre la paroi interne de la préforme,
caractérisé en ce qu'un espace entre la paroi externe de la préforme et la paroi interne du moule est prévu adapté à l'épaisseur de la couche externe du corps creux à obtenir, de manière à autoriser la migration de la matière thermoplastique de la couche intermédiaire et éventuellement du liner au-delà de la couche intermédiaire lors de l'étape de chauffage et d'application de pression.

Selon une caractéristique, le dépôt de la matière composite est réalisé par l'enroulement d'un ruban qui est délivré par un organe applicateur et issu d'une multiplicité de bobines de fil en matière composite constitué avantageusement de filaments de verre et de matière thermoplastique comêlés.

Selon une autre caractéristique, la pression appliquée à l'intérieur de la baudruche est comprise entre 1 et 10 bars, tandis que la température de chauffage de la préforme est au moins égale à la température de fusion la plus élevée des matières thermoplastiques présentes dans la préforme.

D'autres caractéristiques et avantages de l'invention apparaîtront à la lecture de la description qui va suivre, en regard des dessins annexés sur lesquels :
- la figure 1 est une vue en perspective d'un corps creux selon l'invention;
- la figure 2 est une vue en perspective schématique du dispositif de mise en oeuvre du ruban en matière composite par enroulement filamentaire autour du liner constituant la couche interne du corps creux;
- la figure 3 est une vue en coupe d'un moule avant obtention du corps creux final, moule dans lequel est placée la préforme constituée par le liner revêtu de matière composite;

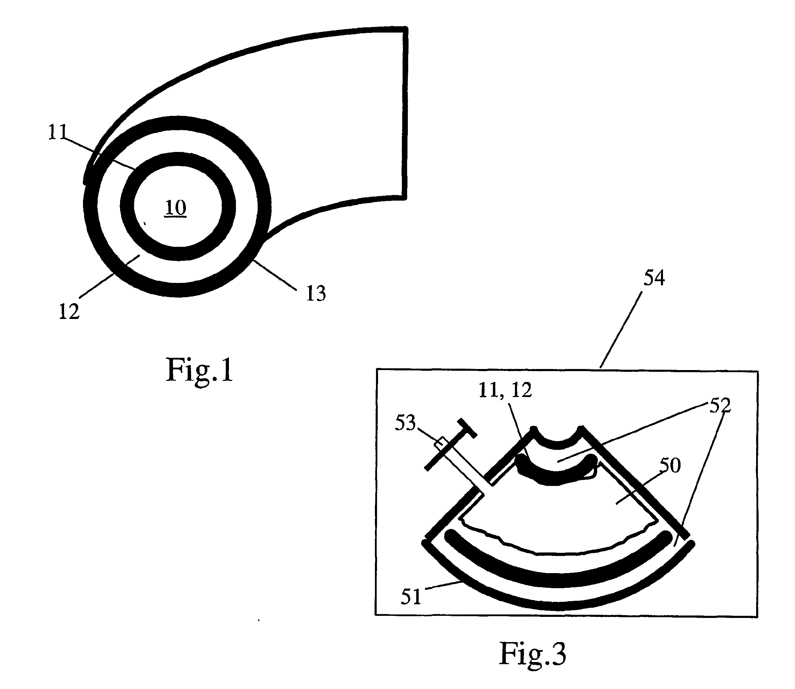

La figure 1 est une vue en perspective d'un corps creux composite 1 de forme complexe comportant au moins une ouverture 10. La forme est dite complexe en ce sens que sa surface peut présenter des parties concaves et/ou convexes. Le corps creux ici illustré est un coude pouvant raccorder par exemple deux tuyaux destinés à véhiculer des fluides sous pression.

Sont visibles en coupe les trois couches constituantes du corps creux 1 : la couche interne 11, la couche intermédiaire 12 composite et la couche externe 13.

La couche interne 11 constitue le "liner" du corps creux, elle est en matière thermoplastique et produite par tout procédé connu du type extrusion, injection ou moulage.

Cette couche interne est revêtue par enroulement filamentaire de la couche intermédiaire 12 qui est à base de matière thermoplastique et de fibres de renforcement telles que des fibres de verre. La matière composite de la couche intermédiaire 12 se présente au moment de son dépôt sur le liner sous la forme d'un ruban qui est enroulé autour dudit liner comme il sera expliqué plus loin dans la description, la matière thermoplastique de la couche intermédiaire n'étant pas forcément identique à celle du liner mais compatible avec elle pour établir leur solidarisation dans l'étape ultérieure de consolidation.

Enfin, la couche externe 13 qui constitue un revêtement de protection de la couche intermédiaire 12 est en matière thermoplastique identique à celle de la couche intermédiaire 12 et éventuellement de la couche interne 11. Il s'agit, non pas d'un ajout de matière autour de la couche intermédiaire, mais de la matière de la couche intermédiaire et éventuellement de la couche interne qui a migré au-delà de la couche intermédiaire au moment de l'étape de consolidation du liner et des enroulements du ruban.

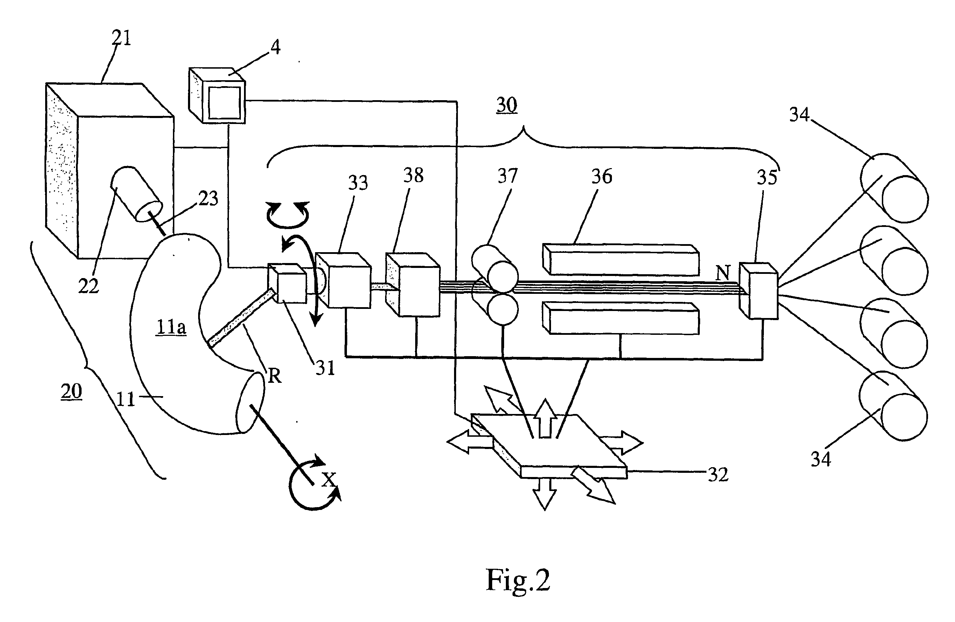

Le procédé de fabrication du corps creux va à présent être décrit en regard des figures 2 et 3 illustrant les dispositifs de mise en oeuvre. Il comporte deux étapes, la première réalisant une préforme qu'est le liner revêtu de la couche intermédiaire 12 non consolidée, et la seconde permettant d'obtenir le produit fini pourvu de la couche externe 13 et consolidé.

La première étape consiste en l'application de la matière composite sur la surface externe totale 11 a du liner 11. A cet effet, le dispositif de mise en oeuvre de la figure 2 comporte un système de support 20 du liner et un ensemble 30 de distribution de la matière composite à déposer sur le liner.

Le système de support 20 comporte un bâti 21 sur lequel est monté un arbre 22 rotatif autour d'un axe X et destiné à entraîner en rotation le liner 11. L'extrémité libre 23 de l'arbre est apte à recevoir, par emboîtement, vissage ou tout autre moyen équivalent, soit un mandrin, ici non représenté, autour duquel est enfilé le liner lorsque celui-ci présente une symétrie de révolution, soit directement l'ouverture 10 du liner adaptée à coopérer tel qu'illustré sur la figure 2.

L'ensemble de distribution 30 consiste en un organe applicateur 31 et en divers éléments explicités dans la suite de la description qui sont fixés avantageusement sur un banc commun 32.

L'organe applicateur 31 est situé à l'extrémité d'un mécanisme de support 33, il peut être animé par rapport à la surface du liner 11 de mouvements de translation selon une direction parallèle et deux directions perpendiculaires à l'axe de rotation X ainsi que de pivotements autour d'axes perpendiculaires à l'axe X.

L'organe applicateur 31 délivre la matière composite à l'état chauffé sous la forme d'un ruban R qui est déposé sur la surface externe 11 a du liner, l'organe étant constamment maintenu au plus proche de cette surface et décrivant celle-ci le long d'une trajectoire définie par la combinaison des mouvements de rotation du liner autour de l'axe X et de translation et/ou pivotement de l'organe applicateur 31. Les mouvements de rotation, de translation et de pivotement sont contrôlés par des moyens à commande numérique 4 gérés par exemple par un ordinateur qui peut être équipé d'un logiciel adapté à l'enroulement filamentaire et utilisant les trajectoires géodésiques du liner modélisées mathématiquement. Les moyens de commande 4 contrôlent également la rotation de l'arbre 22 portant le liner.

Le ruban composite R délivré par l'organe 31 est issu d'un procédé mis en oeuvre à l'aide d'un dispositif de fabrication, tous deux décrits dans la demande de brevet française FR 99/13067.

Le ruban, de largeur égale à 15 mm par exemple, est réalisé avantageusement en ligne, c'est-à-dire directement à partir de bobines de fil 34 en matière composite qui sont dévidées concomitamment, de manière indépendante les unes des autres. Chaque fil est constitué de préférence de filaments comêlés de verre et de matière thermoplastique. Ce type de fil est vendu par la société VETROTEX sous le nom commercial Twintex®.

Un dévidage séparé par bobine permet une mobilité relative des filaments, et autorise les différentiels de vitesse de dévidage entre les bobines nécessaires pour compenser les variations de distance entre chacune des trajectoires des filaments depuis les bobines jusqu'à l'application du ruban. Ainsi, un changement d'orientation du ruban par rapport à la direction de dévidage des filaments ne provoque aucune mise en tension des filaments les plus éloignés du centre du rayon de courbure de la trajectoire du ruban.

Cette configuration garantit l'obtention d'un ruban sans variation de largeur et parfaitement plat, en évitant tout chevauchement des filaments ou torsion du ruban.

Sur le banc 32 sont montés, hormis les bobines 34, les divers éléments permettant la fabrication du ruban. La tension imposée au ruban au moment de son application sur le liner est assurée par le passage des filaments au travers des éléments de fabrication.

On rassemble de manière parallèle à l'aide d'un peigne 35 les fils sous la forme d'une nappe N qui pénètre dans une zone 36 où elle est chauffée à une température atteignant au moins celle de fusion de la matière thermoplastique mais sans atteindre la température de ramollissement des fibres de renforcement. On fait ensuite cheminer la nappe N dans un dispositif tournant d'imprégnation 37, tout en maintenant la matière thermoplastique chaude et malléable pour la répartir de manière homogène et garantir la totale imprégnation des fibres de renforcement par celle-ci. Puis la nappe N passe dans un dispositif de conformation et de centrage 38, tout en maintenant sa température à un niveau suffisant pour maintenir à l'état malléable la matière thermoplastique, de manière à obtenir un ruban R constitué par le rapprochement des fils formant ainsi une continuité transversale. Enfin, le ruban est acheminé jusqu'à l'organe applicateur 31 qui comporte des moyens internes de chauffage pour conserver sa malléabilité à la matière thermoplastique du ruban.

Le mécanisme de support 33 de l'organe applicateur 31 est disposé sur le banc commun 32 qui est mobile et commandé par les moyens 4. Les mouvements de translation de l'organe applicateur 31 sont ainsi générés par le déplacement du banc qui, de ce fait, entraîne d'un mouvement identique l'ensemble des éléments de fabrication du ruban. Le chemin parcouru par le ruban depuis le dispositif de conformation 38 jusqu'à l'organe applicateur 31 peut ainsi être optimisé pour maintenir le ruban à la bonne température.

Le démarrage de l'enroulement du ruban R autour du liner 11 débute lorsque le ruban qui défile au travers de ses éléments de fabrication a atteint la température adéquate pour son dépôt, l'amorçage de l'enroulement en dehors du liner pouvant être effectué par tout moyen approprié et accessible par l'homme de l'art. Il est par exemple possible d'utiliser l'arbre rotatif 22 en y fixant par des moyens adhésifs l'extrémité du ruban, l'enroulement commence autour de l'arbre 22 et se poursuit sur le liner au moment voulu.

L'organe applicateur 31 est piloté de façon que le ruban épouse parfaitement les contours de la surface externe du liner. L'angle d'enroulement donné par l'orientation de l'organe applicateur 31 par rapport à la surface du liner et le nombre de couches déposées sont établis en fonction des performances mécaniques souhaitées du produit final et par conséquent des contraintes axiales ou radiales que subira le corps creux.

A la fin de l'enroulement du ruban autour du liner, le ruban est coupé manuellement ou par des moyens automatisés, et la préforme composite est débarrassée des parties de ruban ayant servi à l'amorçage de l'enroulement.

La préforme composite qui est constituée par le liner 11 entouré de ruban composite est ensuite démontée de l'arbre rotatif. On introduit dans cette préforme une baudruche gonflable 50 dont le centrage sera obtenu automatiquement dès la mise sous pression de la baudruche.

La préforme est placée dans un moule 51 en matériau conducteur thermique, tel que de l'aluminium. Le moule est usiné de telle façon que les contours de sa paroi interne reproduisent la forme externe du produit final souhaité. Les dimensions intérieures du moule sont calculées pour laisser subsister un espace 52 entre le liner recouvert de la matière composite et la paroi interne du moule. Après fermeture du moule, de l'air est injecté dans la baudruche 50 au travers de sa valve de gonflage 53 à une pression comprise entre 1 et 10 bars jusqu'à ce que la baudruche occupe le volume intérieur total de la préforme.

Le moule 51 est alors placé dans une étuve 54 dont la température atteint au moins la température de fusion la plus élevée des matières thermoplastiques présentes dans la préforme. La durée d'étuvage est fonction de plusieurs paramètres que sont notamment le type de matériau thermoplastique des couches 11 et 12 , l'épaisseur désirée à obtenir de la couche externe 13 par la migration de la matière thermoplastique de la couche 12 et éventuellement de la couche 11, le type de matériau choisi pour le moule.

Il va de soi que le chauffage de la préforme peut être autrement conçu, le moule pouvant être chauffant, ou bien une résistance pouvant être incorporée à l'intérieur de la baudruche. De plus, le chauffage peut être simultané ou préalable à la mise sous pression de la baudruche.

La chaleur appliquée au moule est transmise à la couche composite 12 et à la matrice 11, elle ramollit et rend fluable la matière thermoplastique de la matière composite et éventuellement du liner. Sous l'effet de la pression appliquée par la baudruche, la matière thermoplastique migre vers la paroi du moule au-delà de la couche composite en chassant et remplaçant l'air subsistant entre les enroulements du ruban pour occuper l'ensemble de l'espace 52, la migration étant stoppée par la paroi interne du moule. Bien entendu, le moule n'est pas totalement étanche de manière à autoriser l'échappement de l'air chassé de la préforme. La largeur de l'espace 52 est étudiée en fonction de l'épaisseur de la couche externe 13 désirée.

Le moule est laissé à refroidir. Après consolidation de la structure, l'air est évacué de la baudruche, le moule est ouvert et le produit fini consolidé est retiré du moule.

## Revendications

1. Corps creux composite comportant une couche interne (11) en matière thermoplastique qui constitue le liner dudit corps, une couche intermédiaire composite (12) en matière thermoplastique dans laquelle sont noyées des fibres de renforcement, et une couche externe (13) en matière thermoplastique, **caractérisé en ce que** la couche externe (13) est formée par la matière thermoplastique constituante de la couche intermédiaire (12) et éventuellement de la couche interne (11), matière qui a migré au-delà de la couche intermédiaire lors de la fabrication du corps creux.

2. Corps creux composite selon la revendication 1, **caractérisé en ce que** le corps creux est constitué, avant la migration, du liner (11) et de la couche intermédiaire composite (12) revêtant ledit liner, la migration de la matière thermoplastique ayant lieu après une mise sous pression de la paroi interne du liner (11) et le chauffage du liner recouvert de la couche intermédiaire (12).

3. Corps creux composite selon la revendication 1 ou 2, **caractérisé en ce que** la matière thermoplastique de la couche composite (12) est identique à celle de la couche interne (11).

4. Corps creux composite selon la revendication 3, **caractérisé en ce que** la matière thermoplastique est une polyoléfine.

5. Corps creux composite selon la revendication 3, **caractérisé en ce que** la matière thermoplastique est un polyester.

6. Corps creux composite selon l'une quelconque des revendications précédentes, **caractérisé en ce que** les fibres de renforcement sont du verre.

7. Procédé de fabrication d'un corps creux composite constitué d'une couche interne en matière thermoplastique formant le liner (11) du corps, d'une couche intermédiaire composite (12) en matière thermoplastique dans laquelle sont noyées des fibres de renforcement et d'une couche externe (13) en matière thermoplastique, procédé comportant les étapes suivantes :
- parer d'une matière composite constituée de matière thermoplastique mélangée à des fibres de renforcement la surface externe (11a) du liner (11) de manière à constituer une préforme;
- introduire dans un moule (51) la préforme à l'intérieur duquel a été insérée une baudruche gonflable (50);
- chauffer la préforme et gonfler l'intérieur de la baudruche pour appliquer une pression contre la paroi interne de la préforme,
**caractérisé en ce qu'**un espace (52) entre la paroi externe de la préforme et la paroi interne du moule est prévu adapté à l'épaisseur de la couche externe (13) du corps creux à obtenir, de manière à autoriser la migration de la matière thermoplastique de la couche intermédiaire (12) et éventuellement du liner (11) au-delà de ladite couche intermédiaire lors de l'étape de chauffage et d'application de pression.

8. Procédé selon la revendication 7, **caractérisé en ce que** le dépôt de la matière composite est réalisée par l'enroulement d'un ruban (R) délivré par un organe applicateur (31) et issu d'une multiplicité de bobines (34) de fil en matière composite.

9. Procédé selon la revendication 8, **caractérisé en ce que** le fil en matière composite est constitué de filaments de verre et de matière thermoplastique comêlés.

10. Procédé selon la revendication 7, **caractérisé en ce que** la pression appliquée à l'intérieur de la baudruche (50) est comprise entre 1 et 10 bars.

11. Procédé selon la revendication 7, **caractérisé en ce que** la température de chauffage de la préforme est au moins égale à la température de fusion la plus élevée des matières thermoplastiques présentes dans la préforme.

## Patentansprüche

1. Verbundhohlkörper, der eine aus einem Thermoplast bestehende Innenschicht (11), die den Liner des Körpers bildet, eine aus einem Thermoplast bestehende Verbundzwischenschicht (12), in welche Verstärkungsfasern eingebettet sind, und eine aus einem Thermoplast bestehende Außenschicht (13) umfasst, **dadurch gekennzeichnet, dass** die Außenschicht (13) aus dem Thermoplast gebildet ist, aus welchem die Zwischenschicht (12) und gegebenenfalls die Innenschicht (11) besteht und welcher bei der Herstellung des Hohlkörpers von der Zwischenschicht migriert ist.

2. Verbundhohlkörper nach Anspruch 1, **dadurch gekennzeichnet, dass** er vor der Migration aus dem Liner (11) und der Verbundzwischenschicht (12), die diesen bedeckt, besteht, wobei die Migration des Thermoplasts nach UnterDruck-Setzen der Innenwand des Liners (11) und Erwärmung des mit der Zwischenschicht (12) bedeckten Liners stattfindet.

3. Verbundhohlkörper nach Anspruch 1 oder 2, **dadurch gekennzeichnet, dass** der Thermoplast der Verbundzwischenschicht (12) gleich dem der Innenschicht (11) ist.

4. Verbundhohlkörper nach Anspruch 3, **dadurch gekennzeichnet, dass** der Thermoplast ein Polyolefin ist.

5. Verbundhohlkörper nach Anspruch 3, **dadurch gekennzeichnet, dass** der Thermoplast ein Polyester ist.

6. Verbundhohlkörper nach einem der vorhergehenden Ansprüche, **dadurch gekennzeichnet, dass** die Verstärkungsfasern aus Glas bestehen.

7. Verfahren zur Herstellung eines Verbundhohlkörpers, der aus einer Innenschicht aus einem Thermoplast, die den Liner (11) des Körpers bildet, einer Verbundzwischenschicht (12) aus einem Thermoplast, in welche Verstärkungsfasern eingebettet sind, und einer Außenschicht (13) aus einem Thermoplast besteht, das die Stufen:
- Aufbringen eines Verbundmaterials, das aus einem mit Verstärkungsfasern vermischten Thermoplast besteht, auf die Außenfläche (11a) des Liners (11), sodass ein Vorformling gebildet wird,
- Einlegen des Vorformlings, in welchen ein aufblasbarer Ballon (50) eingeführt worden ist, in eine Form (51) und
- Erwärmen des Vorformlings und Aufblasen des Inneren des Ballons, um auf die Innenwand des Vorformlings einen Druck auszuüben,
umfasst, **dadurch gekennzeichnet, dass** zwischen der Außenwand des Vorformlings und der Innenwand der Form ein Zwischenraum (52) vorgesehen ist, der an die Dicke der Außenschicht (13) des herzustellenden Hohlkörpers derart angepasst ist, dass die Migration des Thermoplasts der Zwischenschicht (12) und gegebenenfalls des Liners (11) ab der Zwischenschicht in der Stufe der Erwärmung und Druckausübung möglich wird.

8. Verfahren nach Anspruch 7, **dadurch gekennzeichnet, dass** das Aufbringen des Verbundmaterials mittels Aufwickeln eines Bandes (R), das von einem Auftragsorgan (31) abgegeben wird und von einer Vielzahl von Verbundfadenspulen (34) stammt, durchgeführt wird.

9. Verfahren nach Anspruch 8, **dadurch gekennzeichnet, dass** der Verbundfaden aus vermengten Glas- und Thermoplastfilamenten besteht.

10. Verfahren nach Anspruch 7, **dadurch gekennzeichnet, dass** der auf das Innere des Ballons (50) ausgeübte Druck 1 bis 10 bar beträgt.

11. Verfahren nach Anspruch 7, **dadurch gekennzeichnet, dass** die Erwärmungstemperatur des Vorformlings mindestens gleich der höchsten Schmelztemperatur der im Vorformling vorhandenen Thermoplaste ist.

## Claims

1. Hollow composite body comprising an internal layer (11) made of a thermoplastic, which constitutes the liner of the said body, a composite interlayer (12) made of a thermoplastic in which reinforcing fibres are embedded, and an external layer (13) made of a thermoplastic, **characterized in that** the external layer (13) is formed from the constituent thermoplastic of the interlayer (12) and possibly of the internal layer (11), which thermoplastic has migrated beyond the interlayer during manufacture of the hollow body.

2. Hollow composite body according to Claim 1, **characterized in that** the hollow body consists, before migration, of the liner (11) and the composite interlayer (12) covering the said liner, migration of the thermoplastic taking place after pressurization of the internal wall of the liner (11) and heating of the liner covered with the interlayer (12).

3. Hollow composite body according to Claim 1 or 2, **characterized in that** the thermoplastic of the composite layer (12) is identical to that of the internal layer (11).

4. Hollow composite body according to Claim 3, **characterized in that** the thermoplastic is a polyolefin.

5. Hollow composite body according to Claim 3, **characterized in that** the thermoplastic is a polyester.

6. Hollow composite body according to any one of the preceding claims, **characterized in that** the reinforcing fibres are glass fibres.

7. Process for manufacturing a hollow composite body comprising an internal layer made of a thermoplastic, which constitutes the liner (11) of the body, a composite interlayer (12) made of a thermoplastic in which reinforcing fibres are embedded, and an external layer (13) made of a thermoplastic, the process comprising the following steps:
- furnishing the external surface (11a) of the liner (11) with a composite so as to constitute a preform, the said composite consisting of a thermoplastic mixed with reinforcing fibres;
- introducing the preform into a mould (51), an inflatable bladder (50) having been inserted into the preform;
- heating the preform and inflating the inside of the bladder in order to apply pressure against the internal wall of the preform,
**characterized in that** a space (52) between the external wall of the preform and the internal wall of the mould is provided, tailored to the thickness of the external layer (13) of the hollow body to be obtained, so as to allow migration of the thermoplastic of the interlayer (12) and possibly of the liner (11) beyond the said interlayer during the heating and pressure application step.

8. Process according to Claim 7, **characterized in that** the composite is deposited by winding a tape (T) delivered by an applicator (31) and obtained from a multiplicity of wound packages (34) of composite yarn.

9. Process according to Claim 8, **characterized in that** the composite yarn consists of co-mingled glass and thermoplastic filaments.

10. Process according to Claim 7, **characterized in that** the pressure applied to the inside of the bladder (50) is between 1 and 10 bar.

11. Process according to Claim 7, **characterized in that** the temperature to which the preform is heated is at least equal to the highest melting point of the thermoplastics present in the preform.
